(19) **Europäisches Patentamt / European Patent Office / Office européen des brevets**

(11) **EP 1 645 605 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
*C09D 11/10* (2006.01)  *C09D 11/00* (2006.01)

(21) Anmeldenummer: **04023813.1**

(22) Anmeldetag: **06.10.2004**

(54) **Strahlungshärtbare Ink-Jet Tinte**

Radiation-curable ink jet ink

Encre pour impression par jet d'encre durcissable par radiation

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**12.04.2006 Patentblatt 2006/15**

(73) Patentinhaber: **Marabu GmbH & Co. KG**
**71732 Tamm (DE)**

(72) Erfinder:
• **De Rossi, Umberto, Dr.**
**22844 Norderstedt (DE)**
• **Bolender, Oliver, Dr.**
**20255 Hamburg (DE)**
• **Domanski, Bärbel**
**20099 Hamburg (DE)**

(74) Vertreter: **Wagner, Kilian**
**Behrmann Wagner Vötsch**
**Patentanwälte**
**Hegau-Tower**
**Maggistrasse 5 (10. OG)**
**78224 Singen (DE)**

(56) Entgegenhaltungen:
**EP-A- 1 260 563      WO-A-02/46323**
**WO-A-03/011989      WO-A-2004/055123**
**WO-A-2004/067599      US-A1- 2004 069 183**
**US-A1- 2004 103 815      US-A1- 2004 138 335**
**US-B1- 6 235 820**

• **DATABASE WPI Section Ch, Week 200440 Derwent Publications Ltd., London, GB; Class A14, AN 2004-423311 XP002319629 & JP 2004 115649 A (KONICA CORP) 15. April 2004 (2004-04-15)**
• **DATABASE WPI Section Ch, Week 200434 Derwent Publications Ltd., London, GB; Class A97, AN 2004-359184 XP002319630 -& JP 2004 051800 A (SONY CORP) 19. Februar 2004 (2004-02-19)**
• **DATABASE WPI Section Ch, Week 200423 Derwent Publications Ltd., London, GB; Class A97, AN 2004-241898 XP002319631 & JP 2003 238851 A (SEIKO EPSON CORP) 27. August 2003 (2003-08-27)**
• **DATABASE WPI Section Ch, Week 200376 Derwent Publications Ltd., London, GB; Class A97, AN 2003-807359 XP002319632 & JP 2003 128970 A (KONICA CORP) 8. Mai 2003 (2003-05-08)**
• **DATABASE WPI Section Ch, Week 198905 Derwent Publications Ltd., London, GB; Class G02, AN 1989-037287 XP002319633 -& JP 63 312372 A (RICOH KK) 20. Dezember 1988 (1988-12-20)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine strahlungshärtbare Ink-Jet Tinte. Beim Ink-Jet Drucken werden kleine Tintentröpfchen aus einem Druckkopf auf ein zu bedruckendes Substrat ausgestoßen. Die Viskosität der Tinte bei der sogenannten Jet-Ink Temperatur muss hinreichend niedrig sein, um einen Druck mit hoher Geschwindigkeit zu ermöglichen. Übliche Ink-Jet Tinten enthalten daher einen hohen Anteil an Lösemitteln wie beispielsweise Wasser oder organischen Lösemitteln. Solche Tinten, die durch Verdunsten des Lösemittels trocknen, eigenen sich nur zum Bedrucken von saugfähigen Substraten wie beispielsweise Papier.

Zum Bedrucken unporöser Substrate wie beispielsweise Kunststoffen sind strahlungshärtbare Ink-Jet Tinten bekannt. Sie enthalten ungesättigte organische Verbindungen, die unter Einwirkung von Strahlung, insbesondere UV-Licht, polymerisieren. Diese Strahlungshärtung ist in der Regel schneller als die Härtung durch Verdunsten von Lösemitteln. Da die Tinte sofort gehärtet wird, dringt sie kaum in das Medium ein (auch nicht beim Bedrucken von porösen Medien), so dass sich eine vom Medium weitgehend unabhängige Farbgebung ergibt.

Strahlungshärtende Tinten werden üblicherweise mittels Piezo-Druckköpfen auf das Medium aufgebracht. Sie müssen bei der sogenannten Jetting Temperatur (üblicherweise etwa 30 bis 50°C) eine hinreichend niedrige Viskosität aufweisen. Es ist problematisch, diese niedrige Viskosität einzustellen und dennoch eine ausreichende Härtungsgeschwindigkeit zu erzielen. Zur Erzielung einer schnellen Härtung sind Oligomere oder Präpolymere als Bestandteil der Tinte bevorzugt, die aber wiederum die Viskosität erhöhen.

WO-A-2004/067599, WO-A-2004/055123, WO-A-03/011989, EP-A-1 260 563 und WO-A-02/46323 offenbaren Ink-Jet Tinten, die polymerisierbare Monomere und Oligomere enthalten.

Der Erfindung liegt die Aufgabe zugrunde, eine strahlungshärtbare Ink-Jet Tinte zu schaffen, die gute Filmeigenschaften (schnelle Härtung und gute Haftung auf verschiedenen Substraten) aufweist.

Die Erfindung löst die Aufgabe durch die Merkmale des Hauptanspruchs. Vorteilhafte Weiterbildungen sind in den Unteransprüchen angegeben.

Zunächst seien einige im Rahmen der Erfindung verwendete Begriffe erläutert.

Die dynamische Oberflächenspannung wird mit einem Blasentensiometer BP2 der Firma Krüss, Hamburg gemessen. Die zu untersuchende Flüssigkeit wird dabei in ein Probengefäß vorgelegt. Eine Messkapillare (Teflonkapillare mit einem Durchmesser von 0,4 mm) wird auf die Flüssigkeitsoberfläche abgesenkt und 10 mm eingetaucht. Die Kapillare ist mit einem Gasanschluss und unmittelbarem Kapillarende mit einem Drucksensor verbunden. Für die Durchführung der Messung wird Luft durch die Kapillare geleitet. Am Kapillarende bilden sich Gasblasen, deren Druck gemessen wird. Durch Variation der Fließrate des Gases kann die Frequenz der Blasenbildung und damit die Existenzdauer einer einzelnen Blase verändert werden. Eine hohe Blasenbildungsrate entspricht also einem kurzen Oberflächenalter. Die dynamische Oberflächenspannung wird nach der Formel

$$\gamma = \frac{(p_{\max} - p_0) \times r}{2}$$

berechnet. Dabei sind:

$P_{max}$:      der gemessene Maximaldruck,
$P_o$:      der hydrostatische Druck in der Kapillare (abhängig von der Eintauchtiefe),
r:      der Kapillarradius.

Zur Messung der Abnahme der Oberflächenspannung über einen Zeitraum von 1 s wird die gemessene Oberflächenspannung bei einem Blasalter von 10 ms verglichen mit der gemessenen Oberflächenspannung bei einem Blasenalter von 1000 ms. Die Differenz dieser beiden Werte ist die Abnahme der Oberflächenspannung über die erste Sekunde, wobei vorliegend 990 ms näherungsweise als 1 s betrachtet werden.

Die Erfindung hat erkannt, dass eine Ink-Jet Tinte insbesondere beim Bedrucken unporöser Substrate verschiedenen Anforderungen gerecht werden muss. Für die Tröpfchenbildung im Jetting Prozess ist eine verhältnismäßig hohe Oberflächenspannung vorteilhaft. Für die nach dem Auftreffen der Tröpfchen auf das Substrat stattfindende Benetzung ist jedoch eine niedrigere Oberflächenspannung von Vorteil. Die Erfindung kombiniert eine für den Jetting Prozess hohe Oberflächenspannung unmittelbar bei bzw. nach Entstehen der Tröpfchen mit einer sich nach dem Auftreffen sehr schnell erniedrigenden Oberflächenspannung, so dass eine gute Substratbenetzung folgt.

Die erfindungsgemäße Ink-Jet Tinte ist strahlungshärtbar. Dies bedeutet, dass sie insbesondere durch UV-Strahlung ausgehärtet (vorzugsweise durch Polymerisation) werden kann. Es handelt sich vorzugsweise um eine Pigmenttinte, die als Farbstoff partikuläre Pigmente enthält.

Vorzugsweise verläuft die Abnahme der dynamischen Oberflächenspannung innerhalb der ersten Sekunde der Tropfenlebensdauer im wesentlichen linear, über die erste halbe Sekunde erfolgt somit vorzugsweise eine Abnahme von wenigstens 2 mN/m.

Die Abnahme der dynamischen Oberflächenspannung der ersten Sekunde beträgt vorzugsweise wenigstens 5 mN/m.

Die Viskosität der Tinte bei einer typischen Jetting Temperatur von 50°C beträgt 5 bis 25 mPas, vorzugsweise 10 bis 20 mPas, weiter vorzugsweise 13 bis 15 mPas. Drucktemperaturen liegen üblicherweise im Bereich 30-60°C, bevorzugt 35-55°C.

Eine erfindungsgemäße Tinte enthält als wichtige Bestandteile polymerisierbare Monomere und bereits teilpolymerisierte, aber ebenfalls noch polymerisierbare Präpolymere oder Oligomere. Der Anteil polymerisierbarer Monomere beträgt höchstens 70 Gew.-%, vorzugsweise höchstens 60 Gew.-%. Der Anteil polymerisierbarer Oligomere oder Präpolymere beträgt wenigstens 10 Gew.-%, vorzugsweise wenigstens 50 Gew.-%, weiter vorzugsweise wenigstens 20 Gew.-%.

Die Oligomere weisen eine Molmasse von wenigstens 200, vorzugsweise wenigstens 300, weiter vorzugsweise wenigstens 400 auf. Die Obergrenze liegt bei 1000, vorzugsweise bei 800, weiter vorzugsweise bei 600.

Als polymerisierbare Oligomere können beispielsweise verwendet werden Oligoether(meth)acrylate, Urethan (meth)acrylate, Ester(meth)acrylate und Epoxy(meth)acrylate.

Bevorzugte Oligoetheracrylate sind Polyethylenglykol-200 diacrylat (PEG200DA), Polyethylenglykol-400 diacrylat (PEG400DA) und Polyethylenglykol-600 diacrylat (PEG600DA).

Als verwendbare polymerisierbare Monomere seinen beispielsweise genannt Dipropylenglycoldiacrylat (DPGDA), Tripropylenglycoldiacrylat (TPGDA), 4-Tert.-Butylcylohexylacrylat (TBCH), Isobornylacrylat (IBOA), Isobornylmethacrylat (IBOMA), Tetrahydrofurfurylacrylat (THFA), Tetrahydrofurfurylmethacrylat (THFMA), 2-(2-Ethoxyethoxy) ethylacrylat (EEEA), Isodecylacrylat (IDA), Laurylacrylat (LA), Isooctylacrylat (IOA), Propoxyliertes Trimethylolpropantriacrylat (TMPPOTA), Ethylengycoldimethacrylat (EGDMA), Diethylenglycoldimethacrylat (DGDMA), Triethylenglycoldimethacrylat (TIEGDMA), Tetraethylenglycoldimethacrylat (TTEGDMA).

Ein gewisser Anteil polymerisierbarer Oligomere sorgt dafür, dass die Oberflächenspannung nach dem Emittieren der Tröpfchen deutlich abnimmt. Durch die beschriebene Einstellung des Verhältnisses von Monomeren und polymerisierbaren Oligomeren wird dafür gesorgt, dass einerseits die Viskosität ausreichend niedrig ist für den Jetting Prozess (durch einen entsprechenden Anteil von niedrig viskosen Monomeren), dass aber andererseits der vorgesehene Anteil von Oligomeren bzw. Präpolymeren die Differenz der Oberflächenspannung bei einer Oberflächendauer von 10 bzw. 1000 ms deutlich erhöht.

Bei der bevorzugten Ausführungsform liegt somit eine Mischung von polymerisierbaren Monomeren vor, die eine hinreichend niedrige Viskosität einstellen, aber auch eine geringe Änderung der dynamischen Oberflächenspannung über die Zeit aufweisen. Die Monomere können mono- oder difunktionell sein, der Einfluss auf die dynamische Oberflächenspannung innerhalb einer homologen Reihe (beispielsweise Dipropylenglycoldiacrylat und Tripropylenglycoldiacrylat) ist gering. Die vorgesehenen polymerisierbaren Oligomere tragen bei dieser bevorzugten Ausführungsform maßgeblich zur Einstellung der dynamischen Oberflächenspannung gemäß der Erfindung bei.

Die übrigen Bestandteile einer strahlungshärtbaren Ink-Jet Tinte sind dem Fachmann geläufig und beispielsweise in WO-A-02/061001, WO-A-99/29788 und EP-A-0882104 beschrieben.

Die Tinte enthält einen Fotoinitiator, der unter Einwirkung von Strahlung (insbesondere Ultraviolettlicht) freie Radikale erzeugt und somit die Polymerisation der Monomere oder etwaiger zusätzlicher Oligomere initiiert. Geeignete Fotoinitiatoren sind beispielsweise Benzophenon, 1-Hydroxycyclohexylphenylketon oder 2-Methyl-1-[4-(methylthio)phenyl]-2-morpholinopropan-1-on. Der Farbstoff in der erfindungsgemäßen Tinte kann ein löslicher Farbstoff sein, ist jedoch bevorzugt ein dispergierbares Pigment. Der Pigmentanteil der Tinte kann 0,5 bis 15 Gew.-%, bevorzugt 1 bis 5 Gew.-% betragen.

In der Tinte können zusätzliche Bestandteile enthalten sein, beispielsweise oberflächenaktive Stoffe, Entschäumer, Dispergiermittel, Synergisten für den Fotoinitiator, Stabilisatoren, Fließhilfsmittel, biozide Stoffe oder dergleichen.

Die Erfindung wird nachfolgend anhand von Beispielen erläutert.

Eine cyanfarbene UV-härtbare Ink-Jet-Tinte wird nach folgender Rezeptur hergestellt:

| | |
|---|---|
| 70,07 g | Viajet 100[1] |
| 1,93 g | Solsperse 32000[2] |
| 0,48 g | Solsperse 5000[3] |
| 17,52 g | Irgalite Blue GLO[4] |
| 70,0 g | Tetrahydrofurfuryacrylat |
| 150,0 g | N-Vinylcarprolactam |
| 150,0 g | Isobornylacrylat |

(fortgesetzt)

| | |
|---|---|
| 150,0 g | Genomer 1122[5] |
| 50,0 g | DPGDA[6] |
| 80,0 g | CN386[7] |
| 51,0 g | SR 492[8] |
| 70,0 g | LR 8996[9] |
| 45,0 g | CN 922[10] |
| 2,00 g | Genorad 16[11] |
| 2,00 g | TEGO Rad 2300[12] |
| 29,99 g | Irgacure 907[13] |
| 30,00 g | Isopropylthioxanthon |
| 30,01 g | Lucirin TPO[14] |
| **1000,0 g** | |

1 Dispergierhilfsmittel für Pigmente, erhältlich von der Firma UCB Chemicals 2 polymeres Dispergiermittel für Pigmente, erhältlich von der Firma AVECIA 3 Synergist für das polymere Dispergiermittel Solsperse 32000 4 Farbstoffpigment, Fa. CIBA Specialty Chemicals 5 aliphatisches Urethanmonoacrylat (Monomer), erhältlich von der Fa. Rahn AG 6 Dipropylenglykoldiacrylat 7 Aminsynergist, erhältlich von der Firma Cray Valley 8 Sartomer 492 ist ein von der Firma Cray Valley erhältliches mit 3 Mol propoxyliertes Trimethylolpropantriacrylat 9 aminmodifiziertes Acrylharz, erhältlich von der Firma BASF 10 Urethanacrylat (Oligomer), erhältlich von der Fa. Cray Valley 11 Polymerisationsinhibitor gelöst in Acrylsäure-Ester (Glycerinpropoxytriacrylat), erhältlich von der Fa. Rahn 12 Gleit- und Fließmittel auf Basis Silikonpolyetheracrylat, erhältlich von der Firma TEGO Chemie Service GmbH 13 Fotoinitiator 2-Methyl-1[4-(methylthio)phenyl]-2-morpholinopropan-1-on, erhältlich von CIBA Specialty Chemicals 14 2,4,6-Trimethylbenzoyldiphenylphosphinoxid (Fotoinitiator), erhältlich von der Fa. BASF

Die dynamische Oberflächenspannung dieser Tinte wurde mit dem KRÜSS Blasentensiometer in der eingangs beschriebenen Art und Weise gemessen. Die Temperatur betrug 20°C. Die Oberflächenspannung bei einem Oberflächenalter von 10 ms betrug 37 mN/m, bei einem Oberflächenalter von 1000 ms 30 mN/m.

**Patentansprüche**

1. Strahlungshärtbare Ink-Jet Tinte, **gekennzeichnet durch** folgende Merkmale:

   a) der Anteil polymerisierbarer Monomere beträgt höchstens 70 Gew.-%;

b) der Anteil polymerisierbarer Oligomere mit einer Molmasse von 200 bis 800 beträgt wenigstens 10 Gew.-%;
c) die Viskosität bei 50°C beträgt 5 bis 25 mPas;
d) die Abnahme der dynamischen Oberflächenspannung innerhalb der ersten Sekunde beträgt wenigstens 4mN/m.

**2.** Ink-Jet Tinte nach Anspruch 1, **dadurch gekennzeichnet, dass** die Abnahme der dynamischen Oberflächenspannung innerhalb der ersten Sekunde im Wesentlichen linear verläuft.

**3.** Ink-Jet Tinte nach Anspruch 1 oder 2, **dadurch gekennzeichnet, dass** die Abnahme der dynamischen Oberflächenspannung innerhalb der ersten halben Sekunde wenigstens 2mN/m beträgt.

**4.** Ink-Jet Tinte nach einem der Ansprüche 1 bis 3, **dadurch gekennzeichnet, dass** die Abnahme der dynamischen Oberflächenspannung innerhalb der ersten Sekunde wenigstens 5mN/ beträgt.

**5.** Ink-Jet Tinte nach einem der Ansprüche 1 bis 4, **dadurch kennzeichnet, dass** ihre Viskosität bei 50°C 10 bis 20 mPas, vorzugsweise 13 bis 15 mPas beträgt.

**6.** Ink-Jet Tinte nach einem der Ansprüche 1 bis 5, **dadurch gekennzeichnet, dass** der Anteil polymerisierbarer Monomere höchstens 60 Gew.-% beträgt.

**7.** Ink-Jet Tinte nach einem der Ansprüche 1 bis 6, **dadurch gekennzeichnet, dass** der Anteil polymerisierbarer Oligomere wenigstens 15. Gew-%, vorzugsweise wenigstens 20 Gew.-% beträgt.

**8.** Ink-Jet-Tinte nach Anspruch 7, **dadurch gekennzeichnet, dass** die polymerisierbaren Oligomere eine Molmasse von wenigstens 300, vorzugsweise wenigstens 400 aufweisen.

**9.** Ink-Jet Tinte nach Anspruch 7 oder 8, **dadurch gekennzeichnet, dass** die polymerisierbaren Oligomere eine Molmasse von höchstens 600 aufweisen.

**10.** Ink-Jet Tinte nach einem der Ansprüche 7 bis 9, **dadurch gekennzeichnet, dass** die polymerisierbaren Oligomere ausgewählt sind aus der Gruppe bestehend aus Oligoether(meth)acrylaten, Urethan(meth)acrylaten, Ester(meth)acrylaten und Epoxy(meth)acrylaten.

**11.** Ink-Jet Tinte nach Anspruch 10, **dadurch gekennzeichnet, dass** die Oligoetheracrylate ausgewählt sind aus der Gruppe bestehend aus polyethylenglykol-200 diacrylat (PEG200DA), Polyethylenglykol-400 diacrylat (PEG400DA) und Polyethylenglykol-600 diacrylat (PEG600DA).

**12.** Ink-Jet Tinte nach einem der Ansprüche 6 bis 11, **dadurch gekennzeichnet, dass** die polymerisierbaren Monomere ausgewählt sind aus der Gruppe bestehend aus Dipropylenglycoldiacrylat (DPGDA), Tripropylengliycoldiacrylat (TPGDA), 4-Tert.-Butylcylohexylacrylat (TBCH), Isobornylacrylat (IBOA), Isobornylmethacrylat (IBOMA), Tetrahydrofurfurylacrylat (THFA), Tetrahydrofurfurylmethacrylat (THFMA), 2-(2-Ethoxyethoxy)ethylacrylat (EEEA), Isodecylacrylat (IDA) Laurylacrylat (LA), Isooctylacrylat (IOA), Propoxyliertes Trimethylolpropantriacrylat (TMPPOTA), Ethylengycoldimethacrylat (EGDMA), Diethylen-glycoldimethacrylat (DGDMA), Triethylenglycoldimethacrylat (TIEGDMA) und Tetraethylenglycoldimethacrylat (TTEGDMA).

**Claims**

**1.** Radiation-curable ink-jet ink, **characterised by** the following features:

a) the content of monomers which can be polymerised is at most 70 % by weight;
b) the content of oligomers having a molar mass of from 200 to 800 is at least 10 % by weight;
c) the viscosity at 50°C is from 5 to 25 mPa·s;
d) the reduction in the dynamic surface tension within the first second is at least 4 mN/m.

**2.** Ink-jet ink according to claim 1, **characterised in that** the reduction in the dynamic surface tension within the first second occurs in a substantially linear manner.

3. Ink-jet ink according to either claim 1 or claim 2, **characterised in that** the reduction in the dynamic surface tension within the first half second is at least 2 mN/m.

4. Ink-jet ink according to any of claims 1 to 3, **characterised in that** the reduction in the dynamic surface tension within the first second is at least 5 mN/m.

5. Ink-jet ink according to any of claims 1 to 4, **characterised in that** the viscosity thereof at 50°C is from 10 to 20 mPa·s, preferably from 13 to 15 mPa·s.

6. Ink-jet ink according to any of claims 1 to 5, **characterised in that** the content of monomers which can be polymerised is at most 60 % by weight.

7. Ink-jet ink according to any of claims 1 to 6, **characterised in that** the content of oligomers which can be polymerised is at least 15 % by weight, preferably at least 20 % by weight.

8. Ink-jet ink according to claim 7, **characterised in that** the oligomers which can be polymerised have a molar mass of at least 300, preferably at least 400.

9. Ink-jet ink according to either claim 7 or claim 8, **characterised in that** the oligomers which can be polymerised have a molar mass of at most 600.

10. Ink-jet ink according to any of claims 7 to 9, **characterised in that** the oligomers which can be polymerised are selected from the group consisting of oligoether (meth)acrylates, urethane (meth)acrylates, ester (meth)acrylates and epoxy (meth)acrylates.

11. Ink-jet ink according to claim 10, **characterised in that** the oligoether acrylates are selected from the group consisting of polyethylene glycol (200) diacrylate (PEG(200)DA), polyethylene glycol (400) diacrylate (PEG(400)DA) and polyethylene glycol (600) diacrylate (PEG(600)DA).

12. Ink-jet ink according to any of claims 6 to 11, **characterised in that** the monomers which can be polymerised are selected from the group consisting of dipropylene glycol diacrylate (DPGDA), tripropylene glycol diacrylate (TPGDA), 4-tert-butylcyclohexyl acrylate (TBCH), isobomyl acrylate (IBOA), isobornyl methacrylate (IBOMA), tetrahydrofurfuryl acrylate (THFA), tetrahydrofurfuryl methacrylate (THFMA), 2-(2-ethoxyethoxy)ethyl acrylate (EEEA), isodecyl acrylate (IDA), lauryl acrylate (LA), isooctyl acrylate (IOA), propoxylated trimethylolpropane triacrylate (TMPPOTA), ethylene glycol dimethacrylate (EGDMA), diethylene glycol dimethacrylate (DGDMA), triethylene glycol dimethacrylate (TIEGDMA) and tetraethylene glycol dimethacrylate (TTEGDMA).

## Revendications

1. Encre pour impression par jet d'encre, durcissable par irradiation, **caractérisée par** les caractéristiques suivantes :

   a) la proportion de monomères polymérisables est au maximum de 70 % en poids ;
   b) la proportion d'oligomères polymérisables ayant une masse moléculaire de 200 à 800 est d'au moins 10 % en poids ;
   c) la viscosité à 50 °C est de 5 à 25 mPa.s ;
   d) la diminution de la tension superficielle dynamique pendant la première seconde est d'au moins 4 mN/m.

2. Encre pour impression par jet d'encre selon la revendication 1, **caractérisée en ce que** la diminution de la tension superficielle dynamique pendant la première seconde se déroule de façon essentiellement linéaire.

3. Encre pour impression par jet d'encre selon la revendication 1 ou 2, **caractérisée en ce que** la diminution de la tension superficielle dynamique pendant la première seconde est d'au moins 2 mN/m.

4. Encre pour impression par jet d'encre selon l'une quelconque des revendications 1 à 3, **caractérisée en ce que** la diminution de la tension superficielle dynamique pendant la première seconde est d'au moins 5 mN/m.

5. Encre pour impression par jet d'encre selon l'une quelconque des revendications 1 à 4, **caractérisée en ce que** sa viscosité à 50 °C vaut de 10 à 20 mPa.s, de préférence de 13 à 15 mPa.s.

6.  Encre pour impression par jet d'encre selon l'une quelconque des revendications 1 à 5, **caractérisée en ce que** la proportion de monomères polymérisables est d'au maximum 60 % en poids.

7.  Encre pour impression par jet d'encre selon l'une quelconque des revendications 1 à 6, **caractérisée en ce que** la proportion d'oligomères polymérisables est d'au moins 15 % en poids, de préférence d'au moins 20 % en poids.

8.  Encre pour impression par jet d'encre selon la revendication 7, **caractérisée en ce que** les oligomères polymérisables présentent une masse moléculaire d'au moins 300, de préférence d'au moins 400.

9.  Encre pour impression par jet d'encre selon la revendication 7 ou 8, **caractérisée en ce que** les oligomères polymérisables présentent une masse moléculaire d'au maximum 600.

10. Encre pour impression par jet d'encre selon l'une quelconque des revendications 7 à 9, **caractérisée en ce que** les oligomères polymérisables sont choisis dans le groupe constitué par des oligoéther(méth)acrylates, uréthane (méth)acrylates, ester(méth)acrylates et époxy(méth)acrylates.

11. Encre pour impression par jet d'encre selon la revendication 10, **caractérisée en ce que** les oligoétheracrylates sont choisis dans le groupe constitué par le diacrylate de polyéthylèneglycol-200 (PEG200DA), le diacrylate de polyéthylèneglycol-400 (PEG400DA) et le diacrylate de polyéthylèneglycol-600 (PEG600DA).

12. Encre pour impression par jet d'encre selon l'une quelconque des revendications 6 à 11, **caractérisée en ce que** les monomères polymérisables sont choisis dans le groupe constitué par le diacrylate de dipropylèneglycol (DPGDA), le diacrylate de tripropylèneglycol (TPGDA), l'acrylate de 4-tert-butylcyclohexyle (TBCH), l'acrylate d'isobornyle (IBOA), le méthacrylate d'isobornyle (IBOMA), l'acrylate de tétrahydrofurfuryle (THFA), le méthacrylate de tétrahydrofurfuryle (THFMA), l'acrylate de 2-(2-éthoxyéthoxy)éthyle (EEEA), l'acrylate d'isodécyle (IDA), l'acrylate de lauryle (LA), l'acrylate d'iso-octyle (IOA), le triacrylate de triméthylolpropane propoxylé (TMPPOTA), le diméthacrylate d'éthylèneglycol (EGDMA), le diméthacrylate de diéthylèneglycol (DGDMA), le diméthacrylate de triéthylèneglycol (TIEGDMA) et le diméthacrylate de tétraéthylèneglycol (TTEGDMA).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004067599 A
- WO 2004055123 A
- WO 03011989 A
- EP 1260563 A
- WO 0246323 A
- WO 02061001 A
- WO 9929788 A
- EP 0882104 A